# EUROPEAN PATENT APPLICATION

(11) **EP 4 704 191 A1**
(43) Date of publication of application: **04.03.2026**
(21) Application number: 25197780.7
(22) Date of filing: 25.08.2025
(51) Int. Cl.: H01M 4/58, B60L 58/27, H01M 10/42, H01M 10/48, H01M 10/615, H01M 10/625, H01M 10/633

(54) **MATERIAL HANDLING VEHICLE BATTERY WITH ISOLATED SWITCHING DEVICES**

(30) Priority: 28.08.2024 US 202463688196 P
(71) Applicant: The Raymond Corporation, Greene, NY 13778 (US)
(72) Inventor: HARRIS, Daniel, Honeoye Falls, NY 14472 (US); FOLEY, Robert S., Rochester, NY 14610 (US); REED, David James, Fairport, NY 14450 (US)
(74) Representative: Zacco Sweden AB

(57) **Abstract**

An industrial battery design for use in a material handling vehicle (100). The battery includes a battery cell (232, 234, 236, 242, 244, 246), a heater (238, 248) to provide heat to the battery cell (232, 234, 236, 242, 244, 246), a temperature sensor (239, 249) to monitor a temperature of the battery cell (232, 234, 236, 242, 244, 246), a first switching device (202) through which power for the heater (238, 248) is routed, a second switching (204) device through which power for the heater (238, 248) is not routed, and a controller (222). The controller (222) includes circuitry configured to receive temperature data indicative of the temperature of the battery cell (232, 234, 236, 242, 244, 246) from the temperature sensor (239, 249) and to open the first switching device without opening the second switching device based on the temperature data received from the temperature sensor.

## Description

### CROSS-REFERENCE TO RELATED APPLICATIONS

This application claims the benefit of and priority to U.S. Provisional Patent Application No. 63/688,196 filed August 28, 2024, the entirety of which is incorporated by reference herein.

### BACKGROUND

Various types of batteries have been used to provide power to material handling vehicles (MHVs) and to provide power in other industrial applications. However, improved industrial battery designs are generally desired.

### BRIEF SUMMARY

The present disclosure relates generally to an industrial battery design that includes isolated switching devices.

In one aspect, the disclosure provides a material handling vehicle. The material handling vehicle includes a battery compartment and a battery disposed in the battery compartment. The battery includes a battery cell, a heater to provide heat to the battery cell, a temperature sensor to monitor a temperature of the battery cell, a first switching device through which power for the heater is routed, a second switching device through which power for the heater is not routed, and a controller. The controller includes circuitry configured to receive temperature data indicative of the temperature of the battery cell from the temperature sensor and to open the first switching device without opening the second switching device based on the temperature data received from the temperature sensor.

In another aspect, the disclosure provides a battery. The battery includes a battery cell, a heater to provide heat to the battery cell, a temperature sensor to monitor a temperature of the battery cell, a first switching device through which power for the heater is routed, a second switching device through which power for the heater is not routed, and a controller. The controller includes circuitry configured to receive temperature data indicative of the temperature of the battery cell from the temperature sensor and to open the first switching device without opening the second switching device based on the temperature data received from the temperature sensor.

In yet another aspect, the disclosure provides a battery. The battery includes a battery cell, a heater to provide heat to the battery cell, a temperature sensor to monitor a temperature of the battery cell, a first switching device through which power for the heater is routed, a second switching device through which power for the heater is not routed, and a controller. The controller includes circuitry configured to receive temperature data indicative of the temperature of the battery cell from the temperature sensor, open the first switching device without opening the second switching device based on the temperature data received from the temperature sensor, and open the second switching device without opening the first switching device responsive to detecting a fault that is unrelated to the temperature of the battery cell.

The foregoing and other aspects and advantages of the present disclosure will appear from the following description. In the description, reference is made to the accompanying drawings which form a part hereof, and in which there is shown by way of illustration a preferred configuration of the disclosure. Such configuration does not necessarily represent the full scope of the disclosure, however, and reference is made therefore to the claims and herein for interpreting the scope of the present disclosure.

### BRIEF DESCRIPTION OF THE DRAWINGS

The present disclosure will be better understood and features, aspects, and advantages other than those set forth above will become apparent when consideration is given to the following detailed description thereof. Such detailed description references the following drawings.
FIG. 1 is a perspective illustration of an example material handling vehicle including a battery compartment for an industrial battery, in accordance with some aspects of the disclosure.
FIG. 2 is a block diagram illustrating components of an example battery that can be used with the material handling vehicle of FIG. 1, in accordance with some aspects of the disclosure.
FIG. 3 is an illustration showing an example implementation of the battery of FIG. 2, in accordance with some aspects of the disclosure.
FIG. 4 is an illustration showing an example battery case for the battery of FIG. 2, in accordance with some aspects of the disclosure.
FIG. 5 is an illustration showing example components of an electronics tray of the battery of FIG. 2, in accordance with some aspects of the disclosure.
FIG. 6 is an example schematic showing various components of the battery of FIG. 2, in accordance with some aspects of the disclosure.
FIG. 7 is a flowchart illustrating an example process for disconnecting components of the battery of FIG. 2 using isolated switching devices, in accordance with some aspects of the disclosure.

### DETAILED DESCRIPTION

Before any aspects of the invention are explained in detail, it is to be understood that the invention is not limited in its application to the details of construction and the arrangement of components set forth in the following description or illustrated in the following drawings. The invention is capable of other aspects and of being practiced or of being carried out in various ways. Also, it is to be understood that the phraseology and terminology used herein is for the purpose of description and should not be regarded as limiting. The use of "including," "comprising," or "having" and variations thereof herein is meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings.

The following discussion is presented to enable a person skilled in the art to make and use aspects of the present disclosure. Various modifications to the illustrated aspects will be readily apparent to those skilled in the art, and the generic principles herein can be applied to other aspects and applications without departing from aspects of the present disclosure. Thus, aspects of the present disclosure are not intended to be limited to aspects shown but are to be accorded the widest scope consistent with the principles and features disclosed herein. The following detailed description is to be read with reference to the figures, in which like elements in different figures have like reference numerals. The figures, which are not necessarily to scale, depict selected aspects and are not intended to limit the scope of aspects of the present disclosure. Skilled artisans will recognize the examples provided herein have many useful alternatives and fall within the scope of aspects of the present disclosure.

It is also to be appreciated that material handling vehicles (MHVs) are designed in a variety of classes and configurations to perform a variety of tasks. It will be apparent to those of skill in the art that the present disclosure is not limited to any specific MHV, and can also be provided with various other types of MHV classes and configurations, including for example, lift trucks, forklift trucks, reach trucks, SWING REACH^{®} vehicles, turret trucks, side loader trucks, counterbalanced lift trucks, pallet stacker trucks, order pickers, transtackers, tow tractors, and man-up trucks, and can be commonly found in warehouses, factories, shipping yards, and, generally, wherever pallets, large packages, or loads of goods can be required to be transported from place to place. The various systems and methods disclosed herein are suitable for any of operator controlled, pedestrian controlled, remotely controlled, and autonomously controlled material handling vehicles. Further, the various systems and methods disclosed herein are suitable for other vehicles, such as automobiles, busses, trains, tractor-trailers, farm vehicles, factory vehicles, and the like.

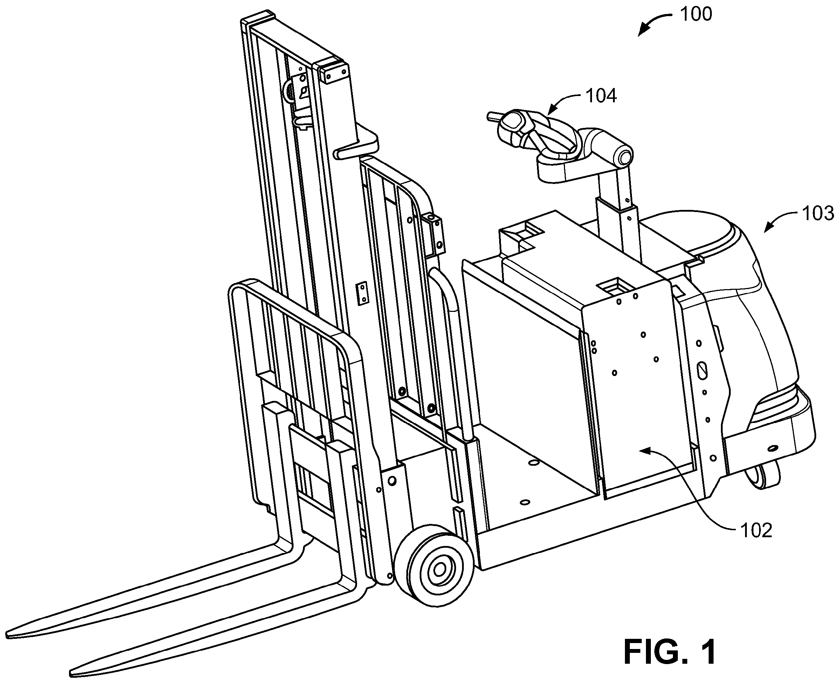

Referring to FIG. 1, a perspective illustration showing an example material handling vehicle 100 is shown, in accordance with some aspects of the disclosure. In the example of FIG. 1, the material handling vehicle 100 is a forklift truck. The material handling vehicle 100 is shown to include a battery compartment 102, a power section 103, and a handle 104. The power section 103 can include any suitable power electronics and other components for operating the material handling vehicle 100. The handle 104 can be used by an operator of the material handling vehicle 100 to steer the material handling vehicle 100. The battery compartment 102 can be used to install and house an industrial battery that powers the material handling vehicle 100, such as the various modular industrial battery configurations described below. The battery compartment 102 in the material handling vehicle 100 can include terminals, ports, wiring, and other components for connecting an industrial battery to the material handling vehicle 100. It will be appreciated that, depending on the type and configuration of material handling vehicle, battery compartments similar to the battery compartment 102 can be provided in a variety of locations and configurations.

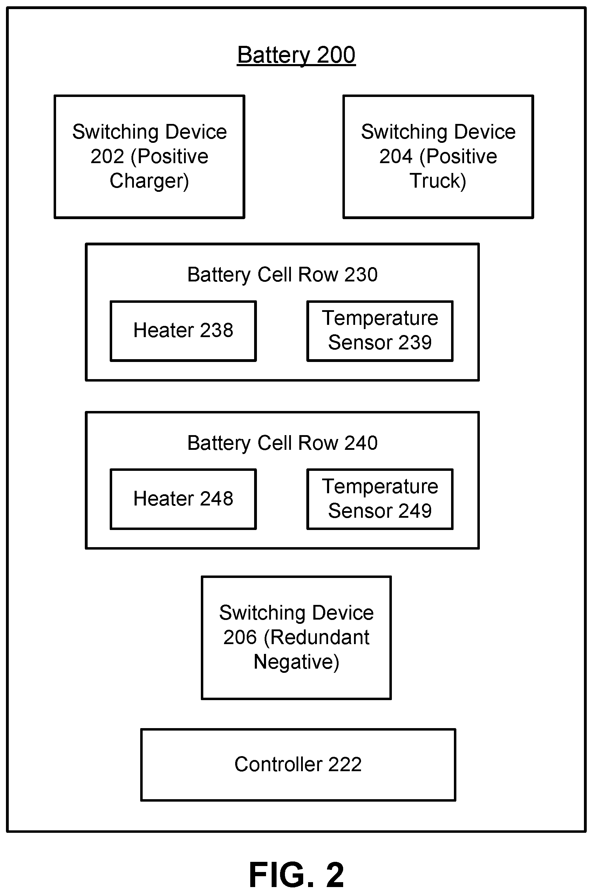

Referring to FIG. 2, a block diagram illustrating components of an example battery 200 that can be used with the material handling vehicle 100 is shown, in accordance with some aspects of the disclosure. In particular, the battery 200 can be a sealed battery and can be disposed within the battery compartment 102 of the material handling vehicle 100. As shown in FIG. 2, the battery 200 can include a battery cell row 230 and a battery cell row 240. The battery 200 can also include a heater 238 that can be used to heat the battery cell row 230 and a temperature sensor 239 that can be used to generate temperature data associated with the battery cell row 230. Similarly, the battery 200 can include a heater 248 that can be used to heat the battery cell row 240 and a temperature sensor 249 that can be used to generate temperature data associated with the battery cell row 240. The battery 200 is also shown to include a controller 222 and three main switching devices: a switching device 202, a switching device 204, and a switching device 206. Finally, the battery 200 is shown to include a controller 222.

The battery cell row 230 and the battery cell row 240 can include any number of battery cells. Further, the battery 200 in some examples can include only one of the battery cell row 230 or the battery cell row 240 such that the battery 200 may only include a single row of one or more battery cells. Additionally, the battery 200 can include additional rows of one or more battery cells in addition to the battery cell row 230 and the battery cell row 240 such that the battery 200 may include three or more rows of battery cells in some examples. The battery cell row 230 can include one or more lithium iron phosphate (LFP) battery cells (sometimes referred to as "modules"), and the battery cell row 240 can also include one or more LFP battery cells.

The heater 238 and the heater 248 can be implemented using various suitable types of configurations of heaters. The temperature sensor 239 and the temperature sensor 249 can likewise be implemented using various suitable types and configurations of temperature sensors (e.g., using thermistors, thermocouples, resistance temperature detectors (RTDs), semiconductors, etc.). In general, the heater 238 can receive electrical power and provide heat to the battery cell row 230, and the heater 248 can receive electrical power provide heat to the battery cell row 240. Especially since the battery 200 can be disposed in the battery compartment 102 and/or can be sealed within a battery case (as detailed below), the battery cell row 230 and/or the battery cell row 240 can be in a cold temperature state after periods of inactivity. Accordingly, the heater 238 and the heater 248 can be used to provide heat to the battery cell row 230 and the battery cell row 240 in these scenarios to help the battery 200 more quickly reach a steady operational state.

The temperature sensor 239 can be disposed within the battery 200 in various suitable configurations such that the temperature sensor 239 can generate temperature data associated with the battery cell row 230 and provide the temperature data to the controller 222. The temperature sensor 249 can likewise be disposed within the battery 200 in various suitable configurations such that the temperature sensor 249 can generate temperature data associated with the battery cell row 240 and provide the temperature data to the controller 222. The controller 222 can then use the temperature data from the temperature sensor 239 and the temperature sensor 249 to control the operation of the heater 238 and the heater 248 (e.g., by turning the heater 238 and the heater 248 on or off, by controlling a level of heating provided by the heater 238 and the heater 248, by opening the switching device 202, the switching device 204, and/or the switching device 206 to cut off power to the heater 238 and the heater 248, etc.).

The switching device 202, the switching device 204, and the switching device 206 can be individually opened and closed by the controller 222 to disconnect components of the battery 200 (e.g., from a power source) under particular operating conditions determined by the controller 222. The switching device 202, the switching device 204, and the switching device 206 can be using various suitable types and configurations of switching devices (e.g., contactors, solid state switches, etc.). The switching device 202, the switching device 204, and the switching device 206 can be the primary wear items on the battery 200, and thus the controller 222 can be configured to only open the switching device 202, the switching device 204, and the switching device 206 one at a time in response to detecting certain conditions that are occurring within the battery 200 (e.g., based on sensor data). As opposed to a battery that opens all switching devices at once in response to detecting a fault, or a battery that uses a thermal fuse to disconnect heaters, the controller 222 can implement this sequenced switching device control for the switching device 202, the switching device 204, and the switching device 206 such that the controller 222 can reduce the amount of wear on the switching device 202, the switching device 204, and the switching device 206 and predict which of the switching device 202, the switching device 204, and the switching device 206 will wear most quickly. In particular, the controller 222 can determine which of the switching device 202, the switching device 204, and the switching device 206 will wear most quickly based on the number of times the controller 222 opens the switching device 202, the switching device 204, and the switching device 206 (the higher the number of times opened, the more likely to wear). The controller 222 can record the number of times that it opens the switching device 202, the switching device 204, and the switching device 206 in memory.

The switching device 202 in particular can be a positive charger side switching device of the battery 200. The power for the heater 238 and the heater 248 can be routed through the switching device 202, but not through the switching device 204 or the switching device 206. The controller 222 can receive temperature data from the temperature sensor 239 and the temperature sensor 249 and can open the switching device 202 (without opening the switching device 204 or the switching device 206) based on the temperature data. For example, the controller 222 can open the switching device 202 (without opening the switching device 204 or the switching device 206) responsive to determining that the temperature data from the temperature sensor 239 and the temperature sensor 249 exceeds a threshold temperature level.

The threshold temperature level can be set and/or adjusted during operation of the battery 200 based on various factors. Additionally, the controller 222 can be configured to open the switching device 202 to cut off power to the heater 238 and the heater 248 based on temperature data received from other temperature sensors included in the battery 200 beyond specifically the temperature sensor 239 and the temperature sensor 249. For example, the threshold temperature level can be a temperature level where heating of the battery cell row 230 and/or the battery cell row 240 is no longer required. The threshold temperature level can vary based on factors such as the type and modular configuration of battery cells used in the battery 200 (e.g., capacity, energy density, voltage range, nominal voltage, weight, 1x2 cell configuration, 2x2 cell configuration, 2x3 cell configuration, etc.) and the sampling time period used by the controller 222 for the temperature sensor 239, the temperature sensor 249, and/or other temperature sensors included in the battery 200.

The switching device 204 in particular can be a positive truck side switching device of the battery 200, and the switching device 206 in particular can be a redundant negative switching device of the battery 200. The controller 222 can be configured to open the switching device 204 (without opening the switching device 202 or the switching device 206) responsive to detecting various faults and conditions that may occur within the battery 200. For example, based on sensor data and/or communications, the controller 222 can open the switching device 204 (without opening the switching device 202 or the switching device 206) responsive to detecting a communication loss fault, a short circuit fault, a low state of charge condition, and/or other faults and conditions that may occur within the battery 200. In particular, the controller 222 can open the switching device 204 responsive to detecting a fault that is unrelated to the temperature of the battery cell row 230 or the battery cell row 240.

Similarly, the controller 222 can also be configured to open the switching device 206 (without opening the switching device 202 or the switching device 204) responsive to detecting various types of faults and conditions that may occur within the battery 200. For example, based on sensor data and/or communications, the controller 222 can open the switching device 206 (without opening the switching device 202 or the switching device 204) responsive to detecting a communication loss fault, a short circuit fault, a low state of charge condition, and/or other faults and conditions that may occur within the battery 200. Additionally, since the switching device 206 can serve as a redundant switching device, the controller 222 can in some scenarios be configured to open the switching device 206 responsive to detecting a fault or condition associated with the switching device 202 and/or the switching device 204 (e.g., a mechanical failure due to wear, a communication loss fault, etc.).

The controller 222 can be implemented in various ways within the battery 200, including by using one or multiple separate controller devices. For example, the controller 222 can include various suitable types of processing circuitry (e.g., one or more central processing units (CPUs), etc.) and memory (e.g., volatile, non-volatile, random-access memory (RAM), read-only memory (ROM), electrically erasable programmable read-only memory (EEPROM), etc.). The memory can include one or more non-transitory machine-readable storage media having instructions stored thereon that, when executed by the processing circuitry, cause the processing circuitry to perform various operations in accordance with the instructions. The controller 222 can also include various suitable types of communications interfaces for communicating via various suitable protocols (e.g., a controller area network (CAN) interface for communicating via a CAN bus, an Ethernet interface, a serial communications interface, etc.). The controller 222 can then communicate with various components of the battery 200 (e.g., the switching device 202, the switching device 204, the switching device 206, the heater 238, the temperature sensor 239, the heater 248, the temperature sensor 249, etc.), with the material handling vehicle 100 (e.g., a vehicle controller of the material handling vehicle 100, etc.), and/or with other computing devices (e.g., a server, a personal computing device, etc.).

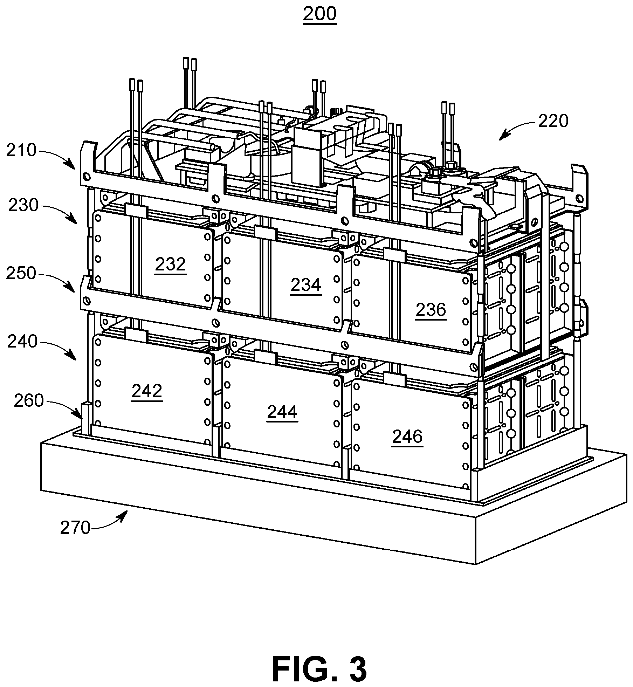

Referring to FIG. 3, an illustration showing an example implementation of the battery 200 is shown, in accordance with some aspects of the disclosure. In particular, the implementation of the battery 200 as shown in FIG. 3 does include both the battery cell row 230 and the battery cell row 240, and each of the battery cell row 230 and the battery cell row 240 include three LFP battery cells. In particular, as shown, the battery cell row 230 includes a battery cell 232, a battery cell 234, and a battery cell 236 and the battery cell row 240 includes a battery cell 242, a battery cell 244, and a battery cell 246. This 2x3 cell configuration as shown represents just one possible implementation of the battery 200. The design of various components of the battery 200, including the switching device 202, the switching device 204, and the switching device 206, can provide repeatable manufacturing for various types of modular battery cell configurations. For example, the battery 200 can alternatively include a 2x2 cell configuration, a 1x1 cell configuration, a 1x2 cell configuration, etc., depending on the desired application (e.g., the type of material handling vehicle, etc.).

As shown in FIG. 3, the battery 200 can also include a metal base plate 270. The metal base plate 270 can be formed using a variety of suitable metals (e.g., steel, aluminum, etc.) and can have different dimensions depending on the intended application of the battery 200. The metal base plate 270 can generally provide structure to serve as a base for the battery 200. Additionally, a lower metal tray 260 can be formed on or otherwise disposed above the metal base plate 270. The lower metal tray 260 can likewise be formed using a variety of suitable metals (e.g., steel, aluminum, etc.) and can have different dimensions depending on the intended application of the battery 200. The battery cell row 240 including the battery cell 242, the battery cell 244, and the battery cell 246 can then be formed on or otherwise disposed above the lower metal tray 260. Further, a middle metal tray can be disposed above battery cell row 240 including the battery cell 242, the battery cell 244, and the battery cell 246. The middle metal tray 250 can also be formed using a variety of suitable metals (e.g., steel, aluminum, etc.) and can have different dimensions depending on the intended application of the battery 200. The battery cell row 230 including the battery cell 232, the battery cell 234, and the battery cell 236 can then be formed on or otherwise disposed above the middle metal tray 250.

Then, as shown in FIG. 3, the top tray 210 can be disposed above the battery cell row 230 including the battery cell 232, the battery cell 234, and the battery cell 236. The top tray 210 can likewise be formed using a variety of suitable metals (e.g., steel, aluminum, etc.) and can have different dimensions depending on the intended application of the battery 200. Finally, the electronics tray 220 can be formed on or otherwise disposed above the top tray 210. The electronics tray 220 can include a variety of electronic and/or mechanical components for the battery 200, as will be detailed further below. As noted, the electronics tray 220 can be an integral part of the top tray 210, or the electronics tray 220 can be separate from the top tray 210. In examples where the electronics tray 220 is separate from the top tray 210, the electronics tray 220 can be secured to the top tray 210 in a variety of suitable manners (e.g., using various types of fasteners, etc.).

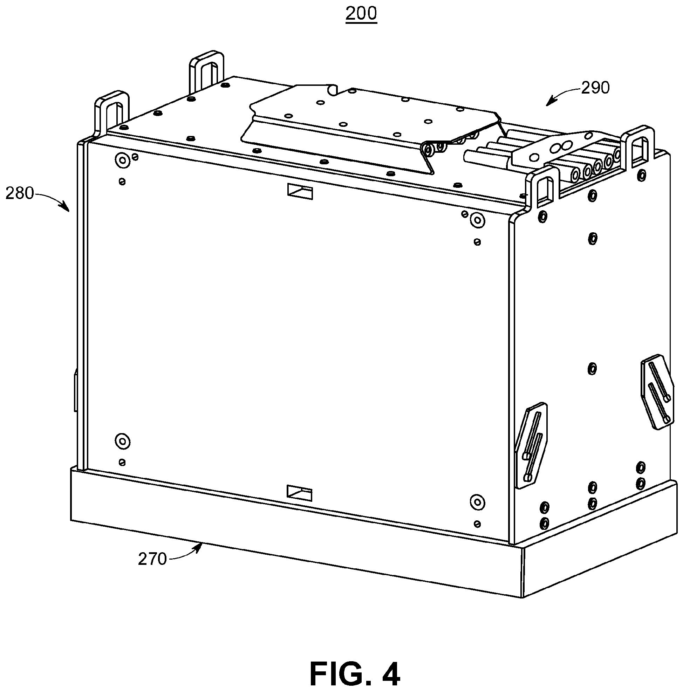

Referring to FIG. 4, an illustration showing an example implementation of a battery case 280 for the battery 200 is shown, in accordance with some aspects of the disclosure. Along with the metal base plate 270, the battery case 280 can be used to provide a sealed enclosure that protects internal components of the battery 200 (e.g., the battery cell row 230, the battery cell row 240, the electronics tray 220, etc.) from environmental factors. For example, the sealed enclosure formed by the battery case 280 and the metal base plate 270 can protect the internal components of the battery 200 from ingress of dust, liquid, chemicals, and other potential contaminants. The battery case 280 can be formed using various suitable materials (e.g., bent sheet steel, aluminum, etc.) and can be bolted to the metal base plate 270 to form the sealed enclosure, for example.

Also shown in FIG. 4, the battery 200 can include a lid assembly 290 that can be disposed above the battery case 280. More specifically, the lid assembly can be positioned on a top surface of the battery case 280 (e.g., the surface opposite the metal base plate 270) and secured to the battery case 280 (e.g., via bolting). The battery case 280, the lid assembly 290, and/or the metal base plate 270 can include components that help form a sealed enclosure including, for example, gaskets, compression limiters, etc. In some examples, the metal base plate 270 and/or the lid assembly 290 can be considered part of the battery case 280 itself. Depending on the specific modular configuration of the battery 200, the battery case 280 can have different dimensions for a given application.

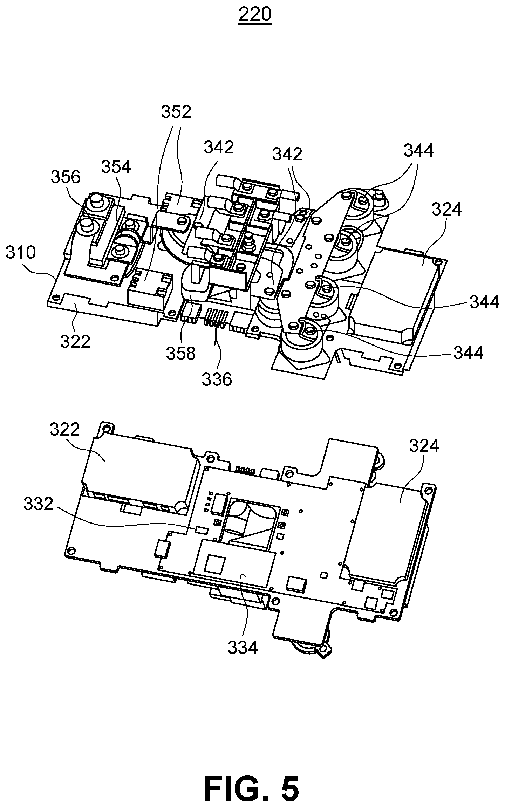

Referring to FIG. 5, an illustration showing example components of the electronics tray 220 is shown, in accordance with some aspects of the disclosure. In particular, FIG. 5 shows both a top view and a bottom view of the electronics tray 220. As shown, the electronics tray 220 can include a main controller 322, sub controllers 324, an interface board 332, a communications board 334, communication ports 326, main contactors 342, series contactors 344, heater relays 352, a system fuse 354, a shunt 356, and a Hall effect sensor 358. Each of these components of the electronics tray 220 can be formed on a metal base plate 310 of the electronics tray 220 as shown in FIG. 5. As noted, the controller 222 as shown in FIG. 2 can be implemented in a variety of ways. For example, the controller 222 can encompass both the main controller 322 and the sub controllers 324, or the controller 222 can encompass just the main controller 322, among other possible implementations.

The metal base plate 310 of the electronics tray 220 can be formed using a variety of suitable metals (e.g., steel, aluminum, etc.) and can have different dimensions depending on the intended application of the battery 200. The metal base plate 310 can generally provide structure to serve as a base for the electronics tray 220. The main controller 322 and the sub controllers 324 can be implemented using various suitable types of electronic controller components. The main controller 322 and the sub controllers 324 can each include various types of processing circuitry and various types of memory storing non-transitory machine-readable instructions that, when executed by the processing circuitry of the main controller 322 and the sub controllers 324, respectively, cause the main controller 322 and the sub controllers 324 to implement operations according to the machine-readable instructions. The main controller 322 can interact with the sub controllers 324 such that the main controller 322 acts as the main initiator of control transactions and the sub controllers 324 respond to communications receive from the main controller 322. The main controller 322 and the sub controllers 324 can operate as separate modules as part of a battery management system (BMS) of the battery 200.

The interface board 332 and the communications board 334 can both be implemented as printed circuit boards (PCBs), among other possible implementations. The interface board 332 can include circuitry for providing various electronic interfaces between components of the battery 200. For example, the interface board 332 can include circuitry to provide an electronic interface between the main controller 322 and the sub controllers 324, to provide an interface between the controller 222 and various sensors included as part of the battery 200 (e.g., to communicatively couple the controller 222 to the sensors). The communications board 334 can include circuitry to provide communications between the battery 200 and the material handling vehicle 100 (e.g., an interface between the battery 200 and one or more controllers on the material handling vehicle 100). The communication ports 336 can be communicatively coupled to the interface board 332 and/or to the communications board 334 and can be used to form various electrical connections between the battery 200 and external components and devices (e.g., to wire the battery 200 to one or more controllers on the material handling vehicle 100, etc.).

The main contactors 342 can include any suitable number of primary contactors used to disconnect components of the battery 200 (e.g., to cut off current flow in a circuit under certain operating conditions). For example, the main contactors 342 can include the switching device 202, the switching device 204, and the switching device 206. The series contactors 344 can likewise include any suitable number of contactors used to disconnect components of the battery 200 (e.g., to cut off current flow in a circuit under certain operating conditions). The main contactors 342 can be common across all modular configurations of the battery 200 (e.g., 1x1 cell configuration, 2x2 cell configuration, etc.) and the series contactors 344 can vary depending on the specific modular configuration of battery 200 (e.g., the series contactors 344 can include two contactors for smaller battery sizes and four contactors for larger battery sizes). Both the main contactors 342 and the series contactors 344 can be implemented using various suitable types and configurations of contactors. Further, the main contactors 342 and the series contactors 344 can be implemented using other suitable components in some applications (e.g., different types of switches, relays, etc.). In some examples, the main contactors 342 can include the switching device 202, the switching device 204, the switching device 206, and/or one or more additional contactors.

The heater relays 352 can generally be used to control operation of one or more heaters to provide heat to the battery cell row 230 and the battery cell row 240 (e.g., the heater 238 and the heater 248). For example, upon power up of the battery 200, the ability to provide heat to the battery cell row 230 and the battery cell row 240 via the heater 238 and the heater 248 can help the battery 200 reach a steady operational state than may otherwise be possible without the inclusion of the one or more heaters. The heater relays 352 can be implemented using various suitable types and configurations of relays, and the heaters can be implemented using various suitable types and configurations of heaters. Further, the heater relays 352 can be implemented using other suitable components in some applications (e.g., different types of switches, contactors, etc.). The heater relays 352 can be connected to the heater 238 and the heater 248 and operated by the controller 222.

The system fuse 354 can be used in the battery 200 to provide overcurrent protection for the battery 200 by interrupting current flow through the battery 200. The system fuse 354 can be implemented using various types and configurations of fuses depending on the application of the battery 200. Similarly, the shunt 356 can be used in the battery 200 to provide further overcurrent protection for the battery 200 by diverting current flow within the battery 200. The shunt 356 can be used to measure the current flowing from one or more battery cells of the battery 200 to a load connected to the battery 200 (e.g., the material handling vehicle 100). The shunt 356 can also be implemented using various types and configurations of shunts depending on the application of the battery 200. The Hall effect sensor 358 can be used in the battery 200 to provide current sensing functionality and/or other types of sensing functionality. The Hall effect sensor 358 can be implemented using various types and configurations of Hall effect sensors depending on the application of the battery 200.

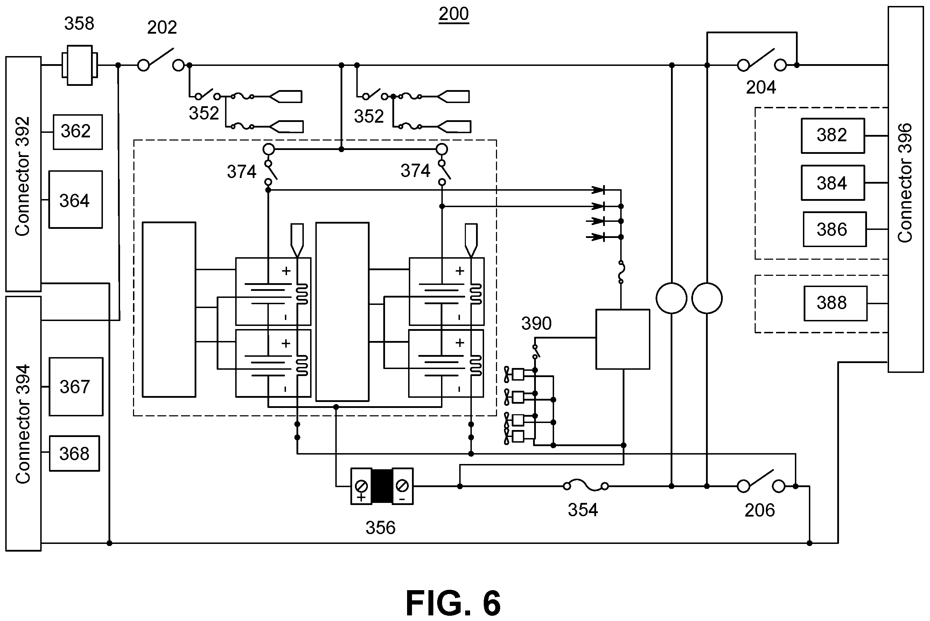

Referring to FIG. 6, an example schematic showing various components of the battery 200 is shown, in accordance with some aspects of the disclosure. From the schematic shown in FIG. 6, various example components of the electronics tray 220 can be seen, including the heater relays 352, the system fuse 354, the shunt 356, and the Hall effect sensor 358. The schematic shown in FIG. 6 also illustrates various additional example components including a charger pilot circuit interface 362, a proximity sensor 364, a charger pilot circuit interface 367, a proximity sensor 368, the switching device 202, a parallel string disconnect 374, the switching device 204, the switching device 206, a termination circuit 382, a truck control interface 384, a truck wake interface 386, a truck control interface 388, a fan disconnect 390, a first charger connector port 392, a second charger connector port 394, and a truck connector port 396. The schematic shown in FIG. 6 represents just one possible implementation of various aspects of the disclosure pertaining to the battery 200, and other implementations are contemplated and possible.

As noted, the main contactors 342 can include, for example, the switching device 202, the switching device 204, and the switching device 206 as shown in FIG. 6. In addition to the functionality detailed above, the switching device 202 can be used to disconnect components of the battery 200 in the event of overcurrent conditions that may result from the connection of one or more charger devices to the battery 200 (e.g., via the example charger connector port 392 and the example charge connector port 394 illustrated in the schematic of FIG. 6). For example, the controller 222 can receive current data from the Hall effect sensor 358 and/or other sensors included in the battery 200 and open the switching device 202 responsive to the determining that the current data exceeds one or more thresholds. In addition to the functionality detailed above, the switching device 204 can be used to disconnect components of the battery 200 and/or the material handling vehicle 100 in the event of overcurrent conditions that may occur within the battery 200 and/or the material handling vehicle 100. For example, the controller 222 can receive data from the Hall effect sensor 358 and/or other sensors included in the battery 200 and open the switching device 204 responsive to the determining that the sensor data exceeds one or more thresholds. In addition to the functionality detailed above, the switching device 206 can likewise be used to disconnect components of the battery 200 and/or the material handling vehicle 100 in the event of overcurrent conditions that may occur within the battery 200 and/or the material handling vehicle 100. For example, the controller 222 can receive data from the Hall effect sensor 358 and/or other sensors included in the battery 200 and open the switching device 206 responsive to the determining that the sensor data exceeds one or more thresholds.

The series contactors 344 can include, for example, the string disconnect contactors 374 as shown in FIG. 6. The string disconnect contactors 374 can be used to cut off current flow to and/or from the battery cells of the battery 200 to disconnect the battery 200 and/or the material handling vehicle 100 in the event of overcurrent conditions that may occur within the battery 200. As shown in the schematic of FIG. 6, the string disconnect contactors 374 can include a first contactor that is connected to a first row of battery cells (e.g., the battery cell row 230) and a second contactor that is connected in parallel with the first contactor and to a second row of battery cells (e.g., the battery cell row 240). The controller 222 can receive data from the Hall effect sensor 358 and/or other sensors included in the battery 200 and open one or more of the string disconnect contactors 374 responsive to the determining that the sensor data exceeds one or more thresholds, for example.

The first charger connector port 392 can be used to connect a first charger device to the battery 200 and the second charger connector port 394 can be used to connect a second first charger device to the battery 200. The truck connector port 396 can be used to connect the batter 200 to the material handling vehicle 100 (e.g., to a controller on the material handling vehicle 100, etc.). The charger pilot circuit interface 362 can include circuitry for providing a charging interface between the first charger device and the battery 200, and the charger pilot circuit interface 367 can include circuitry for providing a charging interface between the second charger device and the battery 200. The proximity sensor 364 can provide proximity sensing functionality such that the controller 222 can detect the presence of a connection between the first charger device and the battery 200, and the proximity sensor 368 can provide proximity sensing functionality such that the controller 222 can detect the presence of a connection between the second charger device and the battery 200.

The termination circuit 382 can be included in the battery 200 to provide an endpoint (termination) of a communication bus of the battery 200 (e.g., a CAN bus). The truck control interface 384 can be included in the battery 200 in order to provide a control interface between the battery 200 and the material handling vehicle 100. The truck wake interface 386 can be used to communicate a wake signal (e.g., power on signal) to the battery 200 via the material handling vehicle 100 (e.g., upon power up of the material handling vehicle 100). The truck control interface 388 can again be included in the battery 200 in order to provide a control interface between the battery 200 and the material handling vehicle 100. In particular, the truck control interface 384 can provide a Public Standard Interface (PSI) option, whereas the truck control interface 388 can provide a Power Source Limited (PSL) interface option for the battery 200. The fan disconnect 390 can be controlled by the controller 222 to operate (e.g., turn on/off, etc.) one or more fans included in the battery 200 to provide heat transfer within the battery 200.

The design of the battery 200 can include two physically separate BMS domains that are communicatively linked (e.g., via a CAN bus, etc.). For example, the controller 222 can include a first control device that is mounted on a high-voltage backplane of the battery 200, and a second control device that is separate from the first control device and located on a low-energy side of a loom of the battery 200 (among other possible installation locations). The first control device can handle disconnection functions (e.g., the process 700, etc.), and the second control device can handle communications functions (e.g., display interfacing, data logging, fleet telematics, etc.). This partitioning of the functionality of the controller 222 can provide advantages in various applications.

The design of the battery 200 can also include storage features that allow the battery 200 to retain various types of historical information. For example, the controller 222 can be configured to read historical information associated with the battery 200 from two separate sources: an on-board non-volatile memory (NVM) and a removable memory card. The controller 222 can verify the integrity of records retrieved from both the on-board NVM and the removable memory card in various manners. If the records differ after verification, the controller 222 can be configured to use the record with the most recent timestamp and overwrite the record with the less recent timestamp to synchronize the records. The historical information contained in the records can include various parameters associated with the battery 200 including an operational hour count, an amp-hours (Ah) delivered count, and/or a cycle count, among other possibilities.

Additionally, the design of the battery 200 can include features that allow the controller 222 to electronically determine the state of various switching devices (e.g., the switching device 202, the switching device 204, the switching device 206, etc.) and to determine open circuit conditions and short circuit conditions. In particular, the controller 222 can be configured to make these determinations based on various resistance values associated with the battery 200. For example, consider an implementation where the switching device 202 and the switching device 204 are connected in parallel. In such an example, a first resistor can be connected in series with the switching device 202, a second resistor can be connected in series with the switching device 204, and a third resistor can be connected in parallel with the switching device 202 and the switching device 204. Then, the controller 222 can be connected to the first resistor, the second resistor, and the third resistor such that the controller 222 receives a single resistance input for two switching devices (in this case, the switching device 202 and the switching device 204).

In such an example, the resistance values for the first resistor, the second resistor, and the third resistor can be selected such that the controller 222 can determine the state of the switching device 202 and the state of the switching device 204 using the single resistance input. Also, the resistance values for the first resistor, the second resistor, and the third resistor can be selected such that the controller 222 can determine an open circuit condition and a short circuit condition using the single resistance input. Let us consider a scenario where the first resistor is selected to have a value of 4120 ohms, the second resistor is selected to have a value of 1690 ohms, and the third resistor is selected to have a value of 1900 ohms. In this scenario, the controller 222 can determine that there is an open circuit condition if the resistance input is in a first range (e.g., greater than 2000 ohms); determine that both the switching device 202 and the switching device 204 are in an open state if the resistance input is in a second range (e.g., between 1600 ohms and 2000 ohms); determine that the switching device 202 is in a closed state and the switching device 204 is in an open state if the resistance input is in a third range (e.g., between 1200 ohms and 1600 ohms); determine that the switching device 202 is in an open state and the switching device 204 is in a closed state if the resistance input is in a fourth range (e.g., between 800 ohms and 1200 ohms); determine that both the switching device 202 and the switching device 204 are in a closed state if the resistance input is in a fifth range (e.g., between 400 ohms and 800 ohms); and determine that there is a short circuit condition if the resistance input is in a sixth range (e.g., below 400 ohms).

Further, the design of the battery 200 can include features that allow the controller 222 to diagnose current sensing functionality provided via the shunt 356. In some examples, the shunt 356 can be a 1200 amp, 50 millivolt shunt (among other possible implementations) that is directly connected to the controller 222 (e.g., via a first connection to a battery side of the shunt 356 and a second connection to a load side of the shunt 356, etc.). The controller 222 can use this direct connection to the shunt 356 to sense a voltage across the shunt 356, to perform analog-to-digital conversions associated with the shunt 356, and to perform overcurrent diagnostics, for example. The controller 222 can detect faults associated with the shunt 356 by controlling various components of the battery 200 and evaluating the resulting current measurements associated with the shunt 356. For example, upon entry into a power on state of the battery 200, the controller 222 can close the switching device 206 and control the heater relays 352 to turn on one or more heaters of the battery 200. Then, the controller 222 can determine whether or not the current sensed by the shunt 356 changes by more than a first threshold amount (e.g., 9 amperes, 12 amperes, 15 amperes, etc.) over a first period of time (e.g., 5 seconds, 7 seconds, etc.) after turning on the one or more heaters. If the current sensed by the shunt 356 does not change by more than the first threshold amount over the first period of time, then the controller 222 can detect a fault associated with the shunt 356. Responsive to detecting the fault associated with the shunt 356, the controller 222 can open the switching device 202, the switching device 204, and/or the switching device 206.

Also, if the current sensed by the shunt 356 has been within a range (e.g., from -9 amperes to 10 amperes, etc.) for a second period of time (e.g., 0.8 hours, 1 hour, etc.), the controller 222 can perform various actions to diagnose the shunt 356. For example, responsive to determining that the current sensed by the shunt 356 has been within the range for the second period of time, the controller 222 can control the heater relays 352 to turn off one or more heaters of the battery 200 for a third period of time (e.g., 5 seconds, 7 seconds, etc.) and store a first current measurement associated with the shunt 356 after the third period of time elapses. Then, after the third period of time elapses, the controller 222 can control the heater relays 352 to turn on one or more heaters of the battery 200 for a fourth period of time (e.g., 5 seconds, 7 seconds, etc.) and store a second current measurement associated with the shunt 356 after the fourth period of time elapses. The controller 222 can then compare the first current measurement to the second current measurement to detect a fault associated with the shunt 356. For example, the controller 222 can detect a fault associated with the shunt 356 responsive to determining that a difference between the first current measurement and the second current measurement is below a second threshold amount (e.g., 7 amperes, 9 amperes, 10 amperes, etc.). Then, responsive to detecting the fault associated with the shunt 356, the controller 222 can open the switching device 202, the switching device 204, and/or the switching device 206.

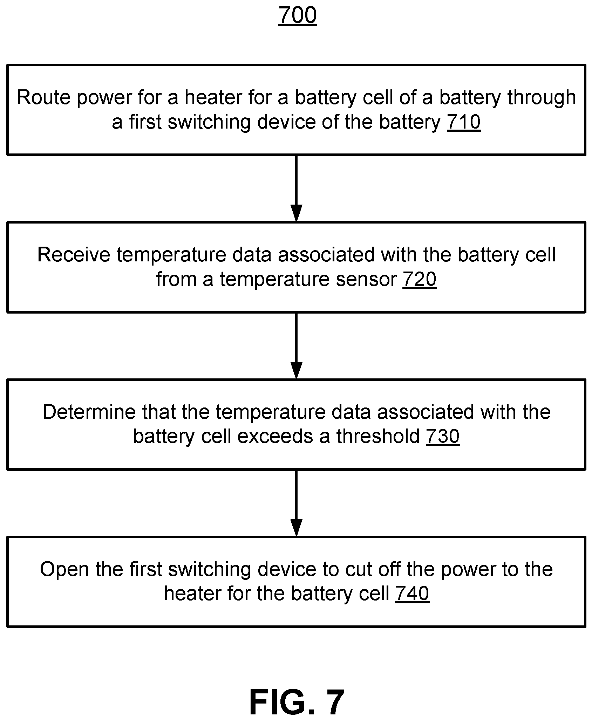

Referring to FIG. 7, a flowchart illustrating an example process 700 for disconnecting components of the battery 200 using isolated switching devices is shown, in accordance with some aspects of the disclosure. The process 700 can be performed at least in part by the controller 222, for example. The process 700 generally includes opening the switching device 202 (without opening the switching device 204 or the switching device 206) to cut off power to the heater 238 and/or the heater 248 based on temperature data received by the controller 222. The temperature data can be received by the controller 222 from the temperature sensor 239 and/or the temperature sensor 249, for example. By implementing the process 700, the wear on the switching device 202, the switching device 204, and the switching device 206 can be reduced, and the controller 222 can predict which of the switching device 202, the switching device 204, and the switching device 206 will wear most quickly by recording the number of times the switching device 202, the switching device 204, and the switching device 206 are opened.

At step 710, the process 700 can include routing the power for a heater for a battery cell of a battery through a first switching device of the battery. For example, when manufacturing the battery 200, the power for the heater 238 for the battery cell row 230 can be routed through the switching device 202. However, the battery 200 can also include a second switching device, such as the switching device 204, for example. When manufacturing the battery 200, the power for the heater 238 for the battery cell row 230 may not be routed through the switching device 204 such that the switching device 204 is at least partially isolated from the switching device 202. Moreover, the controller 222 can be configured to open and close the switching device 202 (e.g., by sending a control signal to the switching device 202) without opening or closing the switching device 204 such that the controller 222 can be configured to implement sequenced switching device control with respect to the switching device 202 and the switching device 204.

At step 720, the process 700 can include receiving temperature data associated with the battery cell from a temperature sensor. For example, the controller 222 can receive temperature data associated with the battery cell 232, the battery cell 234, or the battery cell 236 from the temperature sensor 239. As noted, the temperature sensor 239 can be implemented using various suitable types and configurations of temperature sensors (e.g., using thermistors, thermocouples, RTDs, semiconductors, etc.). The temperature sensor 239 can also be positioned with respect to the battery cell 232, the battery cell 234, and the battery cell 236 in various manners depending on the application. The controller 222 can receive the temperature data from the temperature sensor 239 in various ways (e.g., through detection of a variable resistance, through various suitable communications protocols, etc.). The process 700 can also include receiving data from additional temperature sensors included in the battery 200 at step 270 (e.g., from the temperature sensor 249 and/or from additional temperature sensors included in the battery 200).

At step 730, the process 700 can include determining that the temperature data associated with the battery cell exceeds a threshold. For example, the controller 222 can determine that the temperature data associated with the battery cell 232, the battery cell 234, or the battery cell 236 received from the temperature sensor 239 at step 720 exceeds a threshold temperature level. The threshold temperature level can be set and/or adjusted during operation of the battery 200 based on various factors. For example, the threshold temperature level can be a temperature level where heating of the battery cell 232, the battery cell 234, or the battery cell 236 is no longer required. The threshold temperature level can also vary based on the type of battery cell (e.g., capacity, energy density, voltage range, nominal voltage, weight, etc.) and/or the sampling time period used by the controller 222 for the temperature sensor 239 (e.g., a lower threshold temperature level may be used for a higher sampling period).

At step 740, the process 700 can include opening the first switching device to cut off the power to the heater for the battery cell. For example, the controller 222 can open the switching device 202 (e.g., by sending a control signal to the switching device 202 via various suitable communications protocols) to cut off the power to the heater 238 responsive to determining that the temperature data associated with the battery cell 232, the battery cell 234, or the battery cell 236 received from the temperature sensor 239 at step 720 exceeds the threshold temperature level at step 730. Since the power for the heater 238 may not be routed through the switching device 204 in the design of the battery 200, the controller 222 can open the switching device 202 at step 740 without opening the switching device 204. After opening the switching device 202 at step 740, the controller 222 can adjust the record of the number of times that the switching device 202 has opened in memory (e.g., by incrementing a counter, etc.). The controller 222 can then provide (e.g., on request from a user, responsive to determine that a threshold has been exceeded, etc.) an indication of whether the switching device 202 or the switching device 204 will wear faster based on the number of times that the switching device 202 has been opened and the number of times that the switching device 204 has been opened (e.g., the greater number of times opened indicating a higher likelihood to wear faster).

It should be noted that, while the steps of the process 700 are shown in a particular order in FIG. 7, the process 700 may not include all steps shown, may include additional steps, or may include the steps in a different order.

While various spatial and directional terms, such as top, bottom, lower, mid, lateral, horizontal, vertical, front, and the like may be used to describe examples of the present disclosure, it is understood that such terms are merely used with respect to the orientations shown in the drawings. The orientations may be inverted, rotated, or otherwise changed, such that an upper portion is a lower portion, and vice versa, horizontal becomes vertical, and the like.

Within this specification, aspects have been described in a way which enables a clear and concise specification to be written, but it is intended and will be appreciated that aspects may be variously combined or separated without parting from the present disclosure. For example, it will be appreciated that all preferred features described herein are applicable to all aspects of the disclosed technology described herein.

Thus, while the disclosed technology has been described in connection with particular aspects and examples, the disclosed technology is not necessarily so limited, and that numerous other aspects, examples, uses, modifications and departures from the aspects, examples, and uses are intended to be encompassed by the claims attached hereto. The entire disclosure of each patent and publication cited herein is incorporated by reference, as if each such patent or publication were individually incorporated by reference herein.

Various features and advantages of the present disclosure are set forth in the following claims.

## Claims

1. A battery (200) for a material handling vehicle (100), comprising:
a battery cell (232, 234, 236, 242, 244, 246);
a heater (238, 248) to provide heat to the battery cell (232, 234, 236, 242, 244, 246);
a temperature sensor (239, 249) to monitor a temperature of the battery cell (232, 234, 236, 242, 244, 246);
a first switching device (202) through which power for the heater (238, 248) is routed;
a second switching device (204) through which power for the heater (238, 248) is not routed; and
a controller (222) communicatively coupled to the temperature sensor (239, 249), the first switching device (202), and the second switching device (204), the controller comprising circuitry configured to:
receive temperature data that is indicative of the temperature of the battery cell (232, 234, 236, 242, 244, 246) from the temperature sensor (239, 249); and
based on the temperature data received from the temperature sensor (239, 249), open the first switching device (202) without opening the second switching device (204).

2. The battery (200) of claim 1, wherein the circuitry of the controller (222) is configured to open the second switching device (204) without opening the first switching device (202) responsive to detecting a fault that is unrelated to the temperature of the battery cell (232, 234, 236, 242, 244, 246).

3. The battery (200) of claim 1 or 2, wherein the circuitry of the controller (222) is configured to provide an indication of whether the first switching device (202) or the second switching device (204) will wear faster based on a number of times that the first switching device (202) has been opened and a number of times that the second switching device (204) has been opened.

4. The battery (200) of claim 3, wherein the circuitry of the controller (222) is configured to provide the indication of whether the first switching device (202) or the second switching device (204) will wear faster via a display of the battery (200).

5. The battery (200) of claim 3 or 4, wherein the circuitry of the controller (222) is configured to provide the indication of whether the first switching device (202) or the second switching device (204) will wear faster via a display of the material handling vehicle (100).

6. The battery (200) of any of the claims 1 to 5, wherein, to open the first switching device (202) based on the temperature data received from the temperature sensor (249) , the circuitry of the controller (222) is configured to determine that the temperature data received from the temperature sensor (249) exceeds a threshold.

7. The battery (200) of any of the preceding claims, wherein:
the battery (200) comprises a shunt (356) to a measure a current flowing from the battery cell to a load connected to the battery; and
the circuitry of the controller is configured to:
record a first current measurement associated with the shunt (356);
turn the heater on or off for a period of time;
record a second current measurement associated with the shunt (356) after the period of time elapses; and
detect a fault associated with the shunt (356) by comparing the first current measurement to the second current measurement.

8. The battery (200) of any of the preceding claims, wherein:
the battery (200) comprises a first resistor connected in series with the first switching device (202) and a second resistor connected in series with the second switching device (204);
the controller (222) is connected to the first resistor and the second resistor to receive a resistance input; and
the circuitry of the controller (222) is configured to determine a state of the first switching device (202) and a state of the second switching device (204) based on the resistance input.

9. The battery (200) of claim 8, wherein the first resistor and the second resistor are connected in parallel.

10. The battery (200) of claim 8 or 9, wherein the controller (222) is configured to determine an open circuit condition and a short circuit condition based on the resistance input.

11. The battery (200) of any of the claims 8 to 10, wherein:
the battery (200) comprises a third resistor connected in parallel with the first resistor and the second resistor; and
the controller (222) is connected to the third resistor to receive the resistance input.

12. The battery (200) of claim 11, wherein the controller (222) is configured to determine an open circuit condition and a short circuit condition based on the resistance input.

13. The battery (200) of any of the preceding claims, wherein:
the battery cell (232, 234, 236, 242, 244, 246) is sealed within a battery case (280); and
the first switching device (202), the second switching device (204), and the controller (222) are disposed on an electronics tray (220) of the battery (200), the electronics tray (220) being disposed over the battery cell (232, 234, 236, 242, 244, 246) and within the battery case (280).

14. The battery (200) of claim 13, wherein the first switching device (202) comprises a first contactor and the second switching device (204) comprises a second contactor.

15. The battery (200) of any of the preceding claims, wherein the battery cell (232, 234, 236, 242, 244, 246) comprises a lithium iron phosphate (LFP) battery cell.
